# EUROPEAN PATENT APPLICATION

(11) **EP 1 039 620 A2**
(43) Date of publication of application: **27.09.2000**
(21) Application number: 00105615.9
(22) Date of filing: 16.03.2000
(51) Int. Cl.: H02M 7/48

(54) **Energy conversion apparatus**

(30) Priority: 19.03.1999 JP 7501499
(71) Applicant: Winz Corporation, Numazu-City, Shizuoka-Prf. (JP)
(72) Inventor: Nakamura, Yoshimichi, c/o Winz Corporation, Numazu-City, Shizuoka-Prf. (JP)
(74) Representative: Gleiss, Alf-Olav, Dr.jur. Dipl.-Ing.

(57) **Abstract**

An energy conversion apparatus includes at least two DC power supplies (11-14), at least two DC-DC converters (21-24) connected independently to the at least two DC power supplies respectively, each of the at least two DC-DC converters having a function of efficiently taking out power supplied from an associated one of the at least two DC power supplies, respectively, an energy synthesis circuit (3) for gathering DC power obtained from the at least two DC-DC converters, and an inverter (5) for converting the gathered DC power from the energy synthesis circuit to an AC power and supplying the AC power to a power system.

## Description

The present invention relates to an energy conversion apparatus wherein a DC power obtained by DC power supply apparatus such as a wind power generator or various battery apparatus or a photovoltaic array is input to an inverter via a DC-DC converter and converted to an AC power, and the AC power is supplied to a power system. The photovoltaic array is constructed according to the Japanese Industrial Standards (JIS). The photovoltaic array has a frame and/or a base, as well as other constituent elements. In the photovoltaic array, photovoltaic modules or photovoltaic panels are mechanically integrated and interconnected as one unit. The photovoltaic array constitutes one of DC power generators. The photovoltaic module is a minimum power generation unit wherein photovoltaic cells or photovoltaic sub-modules are connected in series and/or in parallel and encapsulated in a casing for protection against the environment, and the photovoltaic module has external terminals to provide a prescribed output. The photovoltaic panel is an assembly of photovoltaic modules which are mechanically coupled and interconnected, thereby to permit installation on the site.

In an example of this type of conventional energy conversion apparatus, a DC power obtained from a plurality of soler battery arrays is converted to an AC current by means of a single power conditioner and reversely supplied to a power system.

The power conditioner used in this case serves to enhance the characteristics of all photovoltaic arrays. The power conditioner has a function (maximum power point tracking (MPPT) control function) for analyzing an operation point (average value) at which the total power generated by all photovoltaic arrays takes a maximum value and thus tracking a maximum power point.

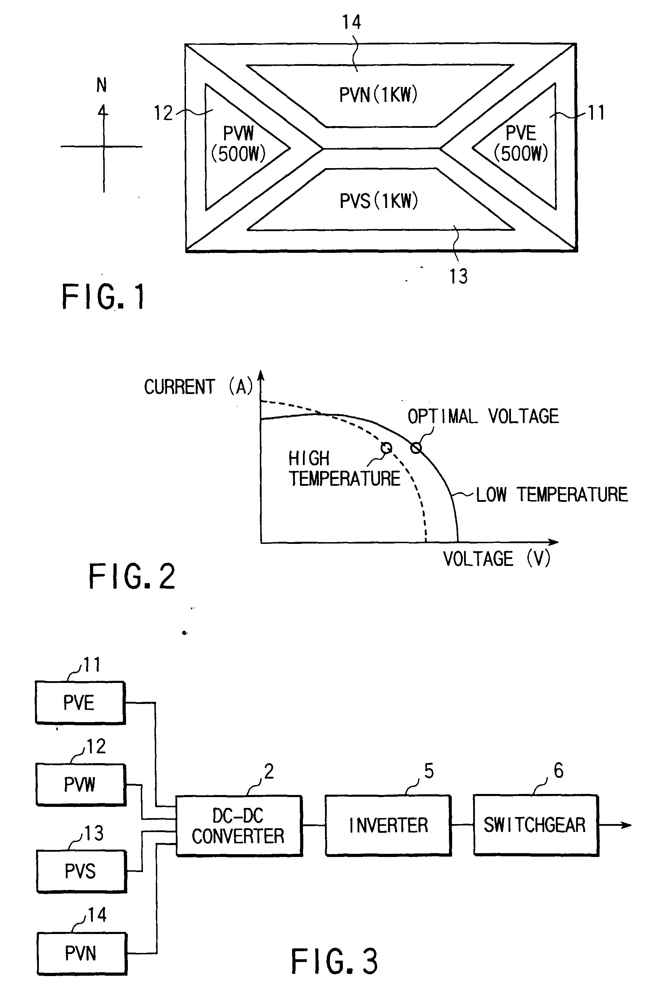

In a case of a plurality of photovoltaic arrays are disposed on, for example, the roof, these arrays may be placed separately on the east, west, south and north sides, as shown in FIG. 1. FIG. 1 shows an example of a hip roof. Photovoltaic arrays (PVE) 11, (PVW) 12, (PVS) 13 and (PVN) 14, which provide array outputs of 500 W, 500 W, 1 kW and 1 kW, respectively, are disposed on the east, west, south and north sides.

In this example, even if no shadow is cast on any of the photovoltaic arrays 11 to 14, the modules constituting the photovoltaic arrays 11 to 14 have different temperatures due to a difference in intensity of solar radiation.

Where there is an obstacle in front of the photovoltaic arrays 11 to 14, the time when a shadow is cast on the photovoltaic arrays 11 to 14 will differ depending on the arrays 11 to 14 and thus the difference in module temperatures increases among the photovoltaic arrays 11 to 14. In this case, as shown in FIG. 3, a DC-DC converter tracks and controls a maximum point of generated power. DC currents from the photovoltaic arrays 11 to 14, as shown in FIG. 3, are input to a DC-DC converter 2 having a maximum power tracking function. A point at which the generated power takes a maximum value is found, and the photovoltaic arrays 11 to 14 are operated at this point. An output from the DC-DC converter 2 is delivered to an inverter 5. The inverter 5 performs DC/AC conversion and produces an AC power.

If the intensity in solar radiation and the module temperature varies, however, the operation voltage at which the optimal voltage or maximum output is obtained varies similarly. Consequently, the power generation efficiency of the entire system deteriorates.

As has been described above, in the conventional energy conversion apparatus, a single DC-DC converter tracks and controls the maximum point of the generated power of all photovoltaic arrays 11 to 14. As a result, the power generation efficiency of the entire system deteriorates.

The object of the present invention is to provide an energy conversion apparatus capable of efficiently taking out a DC power, or an energy conversion apparatus capable of enhancing a power generation efficiency of the entire system.

The first energy conversion device of the present invention is characterized by comprising: at least two DC power supplies; at least two DC-DC converters connected independently to at least two DC power supplies respectively, each of at least two DC-DC converters having a function of efficiently taking out power supplied from an associated one of at least two DC power supplies, respectively; an energy synthesis circuit for gathering DC power obtained from at least two DC-DC converters; and an inverter for converting the gathered DC power from the energy synthesis circuit to an AC power and supplying the AC power to a power system. Here, at least two DC power supplies include at least one of a photovoltaic array, a fuel cell, and an aerogenerator as the DC power sully. Thus, any power supply may be applied as DC power supply.

Since DC-DC converters which can be independently controlled corresponding to each of DC power supplies, which are not limited to one kind, are connected, and energy gathering means gathers and supplies to the inverter after the maximum power is obtained from each DC power supply respectively, the DC power can be efficiently taken out.

Preferred manners of the first and second energy conversion apparatus are as follows
(1) Each of the DC-DC converters has an insulating transformer constituting a resonance-type power supply, and a maximum power point tracking circuit for constantly monitoring power of an associated one of the photovoltaic arrays and controlling an operation voltage of the associated one of the photovoltaic arrays such that an input power of the associated one of the photovoltaic arrays takes a maximum value. The maximum power can be obtained from each DC power supply.
(2) The DC power supplied supply a power supply to the DC-DC converters and the DC-DC converters is operated by the power supply. DC-DC converter does not specially require power for driving.
(3) The energy synthesis circuit has capacitors the number of which corresponds to the number of the DC-DC converters. Since the apparatus is not influenced by the output from other converters, power can be efficiently taken out.
(4) the DC power supplied supply a power supply to the DC-DC converters and the DC-DC converters is operated by the power supply. The inverter does not specially require power for the drive.
(5) The DC-DC converters are used by combining an arbitrary number of DC-DC converters, capacities and input voltages with at least two thereof. Since it is possible to properly combine and use arbitrary DC power supplies, it is possible to construct the desired device configuration according to the environment or the use statement.
(6) At least two DC power supplies are connected to at least two DC-DC converters via terminal boards and DC switches.

Since DC-DC converters are connected corresponding to each DC power supply (that is, which can be considered as DC power supplies such as a photovoltaic array, a fuel battery or a aerogenerator), respectively, and the output of each DC-DC converter is gathered by the energy gathering means and supplied to the inverter, the power generation efficiency of the entire system improves.

As has been described above, the present invention can provide an energy conversion apparatus capable of efficiently taking out a DC power, or an energy conversion apparatus capable of enhancing a power generation efficiency of the entire system.

This summary of the invention does not necessarily describe all necessary features so that the invention may also be a sub-combination of these described features.

The invention can be more fully understood from the following detailed description when taken in conjunction with the accompanying drawings, in which:
FIG. 1 is a plan view of a hip roof for describing a problem of the prior art;
FIG. 2 is a graph showing characteristics of a photovoltaic array, to explain the problem of the prior art;
FIG. 3 is a block diagram schematically showing a conventional energy conversion apparatus;
FIG. 4 is a block diagram schematically showing an energy conversion apparatus according to an embodiment of the present invention;
FIG. 5 is a view for describing the structure of a DC-DC converter shown in FIG. 4;
FIG. 6 is a view for describing the function of the DC-DC converter shown in FIG. 4;
FIG. 7 is a view for describing an energy synthesis circuit shown in FIG. 4; and
FIG. 8 is a view for describing an inverter shown in FIG. 4.

An embodiment of the present invention will now be described with reference to the accompanying drawings.

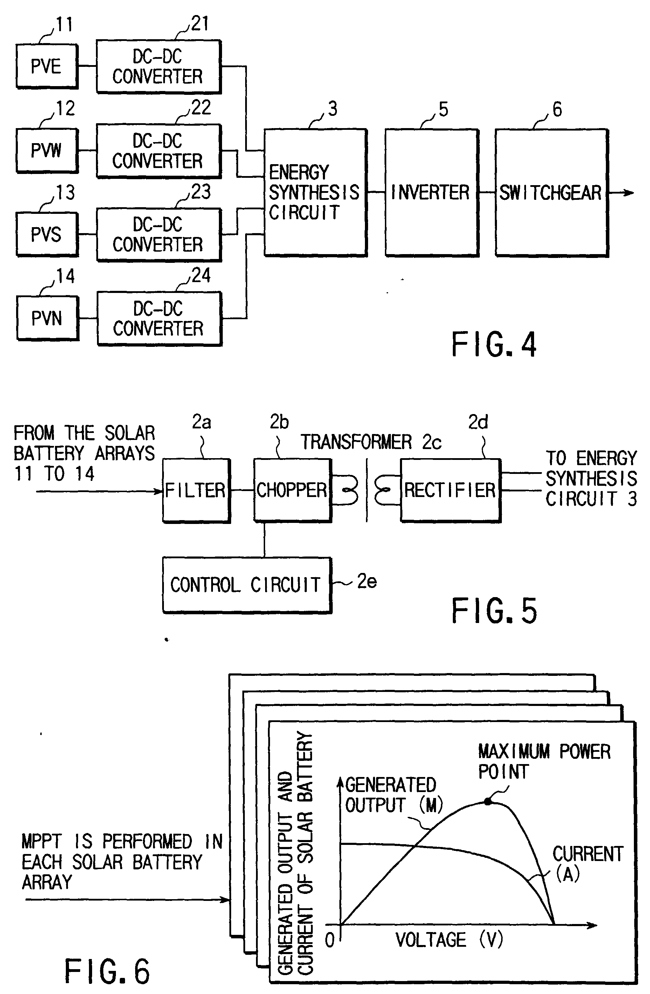

FIG. 4 is a block diagram schematically showing an energy conversion apparatus according to an embodiment of the present invention. A plurality of photovoltaic arrays 11 to 14 are disposed on the east, west, south and north sides of a hip roof, as shown in, e.g. FIG. 1. The photovoltaic arrays 11 to 14 convert solar energy to DC power and produce DC currents.

DC-DC converters 21 to 24 (to be described later in detail) are provided in association with the respective photovoltaic arrays 11 to 14 and have functions (maximum power point tracking (MPPT) control functions) for tracking maximum points of power generated by the photovoltaic arrays 11 to 14.

The photovoltaic arrays 11 to 14 are connected to the DC-DC converters 21 to 24 via terminal boards and DC switches, and not via such connection boxes as are used in the prior art. Specifically, the conventional DC-DC converter 2 is constructed such that a plurality of surge absorbers, block diodes and terminal boards are stored in a connection box having a DC switch connected to an input terminal of one power conditioner.

DC power obtained from the DC-DC converters 21 to 24 is gathered by an energy synthesis circuit 3.

There are also provided a system interconnection inverter 5 for converting a DC power obtained from the energy synthesis circuit 3 to an AC power, and a switchgear 6 for reversely supplying the AC power from the inverter 5 to a power system.

Since the DC-DC converters 21 to 24 have the same structure, only one is shown here. As is shown in FIG. 5, each of the DC-DC converters 21 to 24, comprises a filter 2a for removing noise from a DC voltage waveform obtained from each of the photovoltaic arrays 11 to 14; a chopper 2b for converting an output from the filter 2a to an AC; an insulating transformer 2c for boosting an output voltage from the chopper 2b and constituting a resonance-type power supply; a rectifier 2d for rectifying a secondary voltage of the transformer 2c; and a maximum power point tracking circuit 2e having a maximum power point tracking control function. This DC-DC converters 21 to 24 are constructed to operate by the power from the photovoltaic arrays 11 to 14.

The function of the maximum power point tracking circuit 2e will now be described. The maximum power point tracking circuit 2e analyzes an operation point of each of the photovoltaic arrays 11 to 14, according to a characteristic diagram of FIG. 6 showing the relationship between the voltage and the power/current of the photovoltaic array, finds a point (maximum power point) at which the generated power takes a maximum value, and operates each of the photovoltaic arrays 11 to 14, at this point.

The reason why the maximum power points of the respective DC-DC converters 21 to 24 are found as in the above embodiment will be described. Where photovoltaic arrays 11 to 14 are disposed on a hip roof, for example, the angles of incidence of solar radiation on the photovoltaic arrays 11 to 14 provided on the east, west, south and north sides may vary from one another. In other words, where the photovoltaic arrays are provided on the entire roof, the operation points at which the maximum powers are obtained from the photovoltaic arrays 11 to 14 may differ from one another.

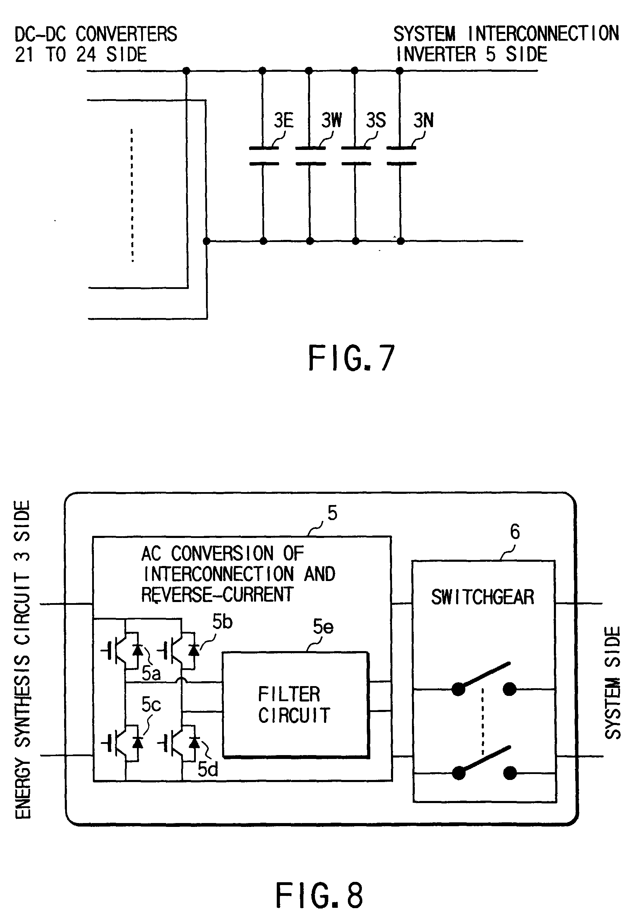

As is shown in FIG. 7, the energy synthesis circuit 3 has a plurality of parallel-connected capacitors (the number of capacitors corresponding to the number of DC-DC converters 21 to 24; for example, four), for example, capacitors 3E, 3W, 3S and 3N each having a withstand voltage of 450V and a capacitance of 470 µF.

As is shown in FIG. 8, the inverter 5 has an inverter circuit wherein four semiconductor elements such as IGBTs (insulated gate bipolar transistors) 5a, 5b, 5c and 5d are bridge-connected and, for example, PWM-controlled by control circuits (not shown), thereby to convert a DC to an AC; and a filter circuit 5e for removing noise from an output current from the inverter circuit. This inverter 5 may be operated by the power from energy synthesis circuit 3 described in detail hereinafter.

With this structure, an energy amount of the energy synthesis circuit 3 is analyzed and an optimal power amount corresponding to the energy amount can be reversely supplied to the power system.

Specifically, control signals are delivered from control circuits (not shown) to the IGBTs 5a, 5b, 5c and 5d, and the energy from the energy synthesis circuit 3 is temporally divided and transferred. Thus, the optimal power amount corresponding to the obtained energy amount is reversely supplied to the power system. A radio-frequency component of, e.g. 17 kHz is removed from the divided power by means of the filter circuit 5e, and the divided power is converted to the reversely supplied AC power.

The operational advantage of the above-described embodiment will now be described. The maximum points of power generated by the photovoltaic arrays 11 to 14 are tracked by the DC-DC converters 21 to 24 connected to the photovoltaic arrays 11 to 14 respectively. Thus, the maximum power of each of the photovoltaic arrays 11 to 14 can be derived.

The power from the DC-DC converters 21 to 24 is input to the energy synthesis circuit 3 and temporarily accumulated as static energy.

The energy accumulated in the energy synthesis circuit 3 is reversely supplied to the power system via the inverter circuit 5.

Since the DC-DC converters 21 to 24 for tracking maximum power points are connected to the photovoltaic arrays 11 to 14 respectively, the power generation efficiency of the entire system increases.

Since each of the DC-DC converters 21 to 24, constantly monitors the power of each of the photovoltaic arrays 11 to 14, and has the maximum power point tracking function, the operation voltage at which the input voltage of each photovoltaic array takes a maximum value can be quickly reached.

Since each of DC-DC converters 21 to 24, includes the insulating transformer 2c provided between the chopper 2b and rectifier 2d, the safety is enhanced. Besides, since each of DC-DC converters 21 to 24, constitutes a resonance-type power supply, the efficiency is enhanced and noise reduced. In addition, conventionally, the DC voltage of about 160V is 330V is input to this DC-DC converter 21 to 24 but, in the present invention, it is possible to use a lower voltage range of even within the range of low voltage, for example, such as the range of 25V to 50V and the range of 50V to 80V or 80V to 160V.

### (Modifications)

The present invention is not limited to the above-described embodiment, and various modifications may be made. In the above embodiment, a plurality of photovoltaic arrays are employed, but other DC power supply devices such as aerogenerators, fuel cell or various battery devices may be combined. With this structure, DC power can be derived efficiently. Furthermore, different kinds of DC power supplies may be combined. That is, in this case, it becomes possible to provide an energy conversion device, which can be used by connecting a plurality of DC power supply of different input voltages (and/or capacities) at the same time (in a hybrid form). In the above embodiment, the number of DC power supply apparatus (photovoltaic arrays) is four, but it may be varied depending on the site for installation and other conditions.

In the energy conversion apparatus shown in FIG. 4, a charger, a battery, a DC-DC converter and a DC switch may be connected on the input side of the energy synthesis circuit 3 or the input side of the energy synthesis circuit 3 in the above-described modifications. Thereby, an emergency backup power supply is provided in case of the absence of solar radiation or wind.

In a case that any of the above-described various DC power supply devices is connected to the DC-DC converter via the terminal board and DC switch, the operation power supply of the DC-DC converter may be derived from this DC power supply device.

## Claims

1. An energy conversion apparatus characterized by comprising:
at least two DC power supplies (11-14);
at least two DC-DC converters (21-24) connected independently to said at least two DC power supplies respectively, each of said at least two DC-DC converters having a function of efficiently taking out power supplied from an associated one of said at least two DC power supplies, respectively;
an energy synthesis circuit (3) for gathering DC power obtained from said at least two DC-DC converters; and
an inverter (5) for converting the gathered DC power from said energy synthesis circuit to an AC power and supplying the AC power to a power system.

2. The energy conversion apparatus according to claim 1, characterized in that said at least two DC power supplies include at least one of a photovoltaic array, a fuel cell, and an aerogenerator as said DC power sully.

3. The energy conversion apparatus according to claim 1 or claim 2, characterized in that each of said DC-DC converters (21-24) has an insulating transformer (2c) constituting a resonance-type power supply, and a maximum power point tracking circuit (2e) for constantly monitoring power of an associated one of said photovoltaic arrays and controlling an operation voltage of said associated one of said photovoltaic arrays such that an input power of said associated one of said photovoltaic arrays takes a maximum value.

4. The energy conversion apparatus according to claim 1 or claim 2, characterized in that said DC power supplied supply a power supply to said DC-DC converters and said DC-DC converters is operated by the power supply.

5. The energy conversion apparatus according to claim 1 or claim 2, characterized in that said energy synthesis circuit (3) has capacitors (3E-3N) the number of which corresponds to the number of said DC-DC converters.

6. The energy conversion apparatus according to claim 1 or claim 2, characterized in that said DC power supplied supply a power supply to said DC-DC converters and said DC-DC converters is operated by the power supply.

7. The energy conversion apparatus according to claim 1 or claim 2, characterized in that said DC-DC converters are used by combining an arbitrary number of DC-DC converters, capacities and input voltages with at least two thereof.

8. The energy conversion apparatus according to claim 1 or claim 2, characterized in that said at least two DC power supplies (11-14) are connected to said at least two DC-DC converters via terminal boards and DC switches.
